Europäisches Patentamt

European Patent Office

Office européen des brevets

(19)

(11) Veröffentlichungsnummer : **0 399 144 B1**

(12) # EUROPÄISCHE PATENTSCHRIFT

(45) Veröffentlichungstag der Patentschrift :
21.10.92 Patentblatt 92/43

(51) Int. Cl.$^5$ : **F04D 29/02, H04N 3/15**

(21) Anmeldenummer : **90102994.2**

(22) Anmeldetag : **16.02.90**

(54) **On-Chip-Signalprozessor.**

(30) Priorität : **03.04.89 DE 3910674**

(43) Veröffentlichungstag der Anmeldung :
**28.11.90 Patentblatt 90/48**

(45) Bekanntmachung des Hinweises auf die
Patenterteilung :
**21.10.92 Patentblatt 92/43**

(84) Benannte Vertragsstaaten :
**AT FR GB IT**

(56) Entgegenhaltungen :
**DE-A- 3 040 129**
**DE-C- 821 822**

(73) Patentinhaber : **Schmetz GmbH & Co. KG**
**Unternehmensverwaltung**
**Holzener Strasse 39**
**W-5750 Menden 1 (DE)**

(72) Erfinder : **Halek, Werner**
**Ob dem Lahrtal 2 a**
**W-5750 Menden (DE)**

(74) Vertreter : **Patentanwaltsbüro Cohausz &**
**Florack**
**Schumannstrasse 97**
**W-4000 Düsseldorf 1 (DE)**

**Beschreibung**

Die Erfindung betrifft eine Vorrichtung zum Verbinden eines innerhalb eines Ofens befindlichen hitzebeständigen Lüfterlaufrades, welches auf der dem Motor zugewandten Seite einen koaxialen hohlen Vorsprung aufweist, der mit einer keramischen Fasermasse gefüllt ist und in einem angeformten koaxialen Flansch endet, der an einer metallenen Scheibe oder an einem Ring angeschraubt ist, mit einer dazu rechtwinklig sich erstreckenden Motorenwelle.

Aus der DE-OS 14 28 201 ist eine gattungsgemäße Vorrichtung bekannt, bei der zur Minderung der Wärmeleitung von dem den heißen Gasen ausgesetzten Ventilator-Laufrad in die mit diesem verbundene Motoren-Antriebswelle ein hohler Vorsprung des Laufrades an der der Motorenwelle zugewandten Seite mit Isoliermaterial, z.B. Mineralwolle oder Glaswolle, ausgefüllt ist. Dieses Isoliermaterial vermindert den Durchtritt von Wärme über die zylindrische Seitenwand des Vorsprungs des mit dem Lüfterlaufrad verbundenen Flansches. Erkennbar ist das Material des mit dem Lüfterrad verbundenen Flansches, der mit dem Lüfterlaufrad temperaturbeaufschlagt ist, gleich dem der auf der Motorenwelle sitzenden Scheibe, die über Schrauben miteinander verbunden sind. So kann die Wärmeableitung aus dem Flansch über den Vorsprung in die Motorenwelle nicht wirksam genug verhindert werden, und daher ist die Anwendung dieser Vorrichtung auf Temperaturen bis maximal 300 °C beschränkt.

Der Erfindung liegt nun die Aufgabe zugrunde, eine Vorrichtung der eingangs genannten Art so zu verbessern, daß ein sicherer und fester Halt bei einer optimalen Übertragung des Drehmomentes gewährleistet ist, wobei Wärmespannungen im Bereich der Verbindung des Lüfterlaufrades mit der Motorenwelle vermieden werden sollen. Gleichzeitig soll der Wärmeabfluß vom Lüfterlaufrad in die Motorenwelle weiter vermindert werden.

Zur Lösung dieser Aufgabe wird bei der gattungsgemäßen Vorrichtung erfindungsgemäß vorgeschlagen, daß das Laufrad und der Vorsprung aus karbonfaserverstärktem Graphit bestehen und daß im Bereich der Befestigungsschrauben zwischen Flansch und Scheibe ein scheibenförmiges Graphitlaminat als federndes Element einliegt.

Eine ausreichende Bewegung der Materialien im Verbindungsbereich wird dann erreicht, wenn im Bereich der Befestigungsschrauben zwischen Flansch und Scheibe ein scheibenförmiges Graphitlaminat als federndes Element einliegt. Die Lüfterverbindung befindet sich zwar hinter der Wärmedämmung, wird jedoch durch die Verlustenergie, die über die Welle abfließt und die durch den Durchtrittsspalt in der Wärmedämmung austritt, erwärmt, so daß es bei heißem Ofen zu Ausdehnungen der Metallteile (Scheibe 4 und Schraube 6) kommt, bzw. zu Schrumpfvorgängen beim Abkühlen des Ofens. Hierbei würden sich die Schrauben lockern, wenn nicht ein elastisches Element für gleichmäßige Vorspannung sorgen würde.

Eine einfache Verbindung der Motorenwelle wird dann geschaffen, wenn an der Scheibe auf der dem Laufrad abgewandten Seite eine Buchse vorsteht, in die das Wellenende formschlüssig hineinragt. Besonders vorteilhaft ist es, wenn daß der Hohlraum des Vorsprungs mit einer keramischen Fasermasse gefüllt ist. Die keramische Fasermasse im Hohlraum des Lüftervorsprungs hat die Aufgabe, den Wärmedurchgang vom Lüfter zur Lüfterverbindung minimal zu halten.

Ein wesentlicher Vorteil der Erfindung liegt neben der dauerhaften Lüfterverbindung also darin, eine Durchführung der Lüfterwelle durch die Wärmedämmung zu erhalten, die geringe Wärmeverluste aufweist. Auch erhält bei geringem Gewicht der Läufervorsprung eine hohe Stabilität.

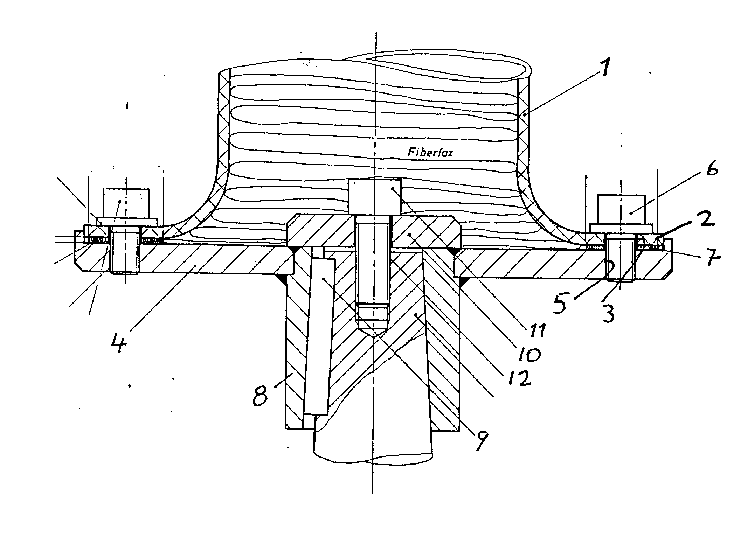

Ein Ausführungsbeispiel der Erfindung ist in der Zeichnung ausschnittweise in einem axialen Schnitt dargestellt, wobei vom Laufrad nur der axiale hohle Vorsprung dargestellt ist.

Das im Ofenraum befindliche Laufrad eines Radiallüfters weist auf einer Seite einen koaxialen hohlen Vorsprung 1 auf, der sich zum freien Ende hin erweitert und dort einen koaxialen Flansch 2 bildet, in dem in regelmäßigen Abständen Öffnungen 3 für eine Schraubverbindung eingebracht sind. Der Vorsprung 1 besteht aus einem karbonfaserverstärkten Graphit, und sein Innenraum ist mit einer keramischen Fasermasse ausgefüllt.

Der ringförmige Flansch 2 des Vorsprungs 1 ist an einer metallenen Scheibe 4 befestigt, die von der Motorenwelle 5 gehalten ist und am Rand mit den Öffnungen 3 fluchtende Gewindebohrungen 5 aufweist, in die Schrauben 6 eingedreht sind, die den Flansch 2 an die Scheibe 4 anklemmen.

Zwischen Scheibe 4 und Flansch 2 befinden sich um die Schrauben 6 herum ringförmige Einlegescheiben 7 aus einem Graphitlaminat, das eine federnde Wirkung besitzt, um eine Vorspannung zwischen Flansch 2 und Scheibe 4 aufgrund des Druckes der Schrauben 6 zu erhalten. Diese Befestigungsweise mit den Graphitlaminatscheiben 7 läßt begrenzte Bewegungen der Flansche 2 gegenüber der Scheibe 4 in radialer und axialer Richtung zu.

Für eine einfache und sichere Befestigung der Motorwelle 5 an der Scheibe 4 ist an dieser koaxial eine Buchse 8 auf der dem Lüfter abgewandten Seite befestigt, deren Inneres nach innen hin konisch abnimmt, so daß ein entsprechend konisch geformtes Motorwellenende dort eingesteckt ist und das Drehmoment durch eine Paßfeder 9 übertragen wird. Das innere Ende der Buchse 8 ist durch eine Andruckscheibe 10 verschlossen, in der koaxial eine Schraube 11 steckt, die in eine Gewindebohrung 12 eingeschraubt ist, die sich koaxial von der Stirnseite der Welle aus in diese erstreckt.

**Patentansprüche**

1. Vorrichtung zum Verbinden eines innerhalb eines Ofens befindlichen hitzebeständigen Lüfterlaufrades, welches auf der dem Motor zugewandten Seite einen koaxialen hohlen Vorsprung aufweist, der mit einer keramischen Fasermasse gefüllt ist und in einem angeformten koaxialen Flansch endet, der an einer metallenen Scheibe oder an einem Ring angeschraubt ist, mit einer dazu rechtwinklig sich erstreckenden Motorenwelle, **dadurch gekennzeichnet,** daß das Laufrad und der Vorsprung (1) aus karbonfaserverstärktem Graphit bestehen und daß im Bereich der Befestigungsschrauben zwischen Flansch (2) und Scheibe (4) ein scheibenförmiges Graphitlaminat (7) als federndes Element einliegt.

**Claims**

1. A device for the connection to a motor shaft extending at right angles thereto of a heat-resistant fan impeller which is disposed inside a furnace and has on the side adjacent the motor a coaxial hollow projection filled with a ceramic fibre substance and terminating in a moulded-on coaxial flange which is screwed to a metal disc or a ring, characterized in that the impeller and the projection (1) are made of carbon-fibre-reinforced graphite, and a disc-shaped graphite laminate (7) is inserted as a resilient element in the zone of the fastening screws between the flange (2) and the disc (4).

**Revendications**

1. Dispositif pour relier un rotor de ventilateur résistant à la chaleur se trouvant à l'intérieur d'un four, qui présente du côté tourné vers le moteur une saillie axiale creuse qui est remplie d'une masse fibreuse céramique et se termine en une flasque coaxiale formée qui est vissée à un disque métallique ou à une bague, à un arbre de moteur s'étendant à angle droit de celui-ci, caractérisé en ce que le rotor et la saillie (1) sont constitués de graphite renforcé de fibres de carbone et que, dans la région des vis de fixation entre flasque (2) et disque (4) est logé un laminé de graphite (7) en forme de disque en tant qu'élément d'élasticité.

Fiberfax